Europäisches Patentamt

European Patent Office

Office européen des brevets

(19)

(11) **EP 0 748 093 A1**

# (12) DEMANDE DE BREVET EUROPEEN

(43) Date de publication:
**11.12.1996 Bulletin 1996/50**

(51) Int. Cl.$^6$: **H04L 27/38**

(21) Numéro de dépôt: **96201548.3**

(22) Date de dépôt: **03.06.1996**

(84) Etats contractants désignés:
**DE FR GB**

(30) Priorité: **08.06.1995 FR 9506755**

(71) Demandeurs:
- **LABORATOIRES D'ELECTRONIQUE PHILIPS S.A.S.**
  **94450 Limeil-Brévannes (FR)**
  Etats contractants désignés:
  **FR**

- **Philips Electronics N.V.**
  **5621 BA Eindhoven (NL)**
  Etats contractants désignés:
  **DE GB**

(72) Inventeurs:
- **Martinez, Georges**
  **75008 Paris (FR)**
- **Guillaud, Jean-Michel**
  **75008 Paris (FR)**

(74) Mandataire: **Landousy, Christian**
  **Société Civile S.P.I.D.**
  **156, Boulevard Haussmann**
  **75008 Paris (FR)**

(54) **Système de transmission numérique muni de moyens décisionnels de changement de mode de synchronisation**

(57) Système de transmission numérique muni d'un émetteur (12) et d'un récepteur (14) qui comprend des moyens de synchronisation (16) pour estimer et compenser des défauts de synchronisation entre une porteuse locale et un signal d'entrée. Les moyens de synchronisation comprennent : des moyens (144) de génération de la porteuse locale, des moyens (140) de détection phase/fréquence corrigeant les défauts de synchronisation en mode d'accrochage, des moyens (240) de détection de phase corrigeant les défauts de synchronisation en mode accroché, des moyens de commande (130, 190) déterminant des requêtes (CP) demandant de placer les moyens de synchronisation soit en mode d'accrochage, soit en mode accroché. Les moyens de commande comprennent des moyens de contrôle d'états (190) qui décident du passage du mode accroché au mode d'accrochage en appliquant au moins une condition de décision.

Les moyens de contrôle d'états permettent de sauvegarder puis de restituer des réglages spécifiques sous le contrôle de la condition de décision.

Application : Systèmes de transmission numérique.

FIG. 1

EP 0 748 093 A1

# Description

L'invention concerne un système de transmission numérique muni d'un émetteur et d'un récepteur qui comprend des moyens de synchronisation pour estimer et compenser des défauts de synchronisation entre une porteuse locale et un signal d'entrée, les moyens de synchronisation comprenant:

- des moyens de génération de la porteuse locale,
- des moyens de détection phase/fréquence délivrant un premier signal d'erreur lequel corrige les défauts de synchronisation en mode d'accrochage,
- des moyens de détection de phase délivrant un second signal d'erreur lequel corrige les défauts de synchronisation en mode accroché,
- des moyens de commande déterminant des requêtes demandant de placer les moyens de synchronisation soit en mode d'accrochage, soit en mode accroché.

Elle concerne également un récepteur mis en oeuvre dans un tel système.

Il peut s'agir de systèmes pour lesquels une information, après avoir été transmise par modulation d'une onde électromagnétique est restituée par démodulation cohérente. Ces systèmes trouvent leur application dans les modems de transmission de données numériques, les faisceaux hertziens, les systèmes de communications spatiales ou optiques dans le cas de liaisons hétérodynes.

On connaît des dispositifs de récupération de porteuse mettant en oeuvre une boucle de récupération de porteuse comprenant un oscillateur local qui est commandé en tension par un signal d'erreur issu de l'écart phase/fréquence qui mesure une désynchronisation entre la porteuse locale fournie par l'oscillateur local et la porteuse de l'émission.

Un dispositif de ce type est par exemple décrit dans le document US 5 301 210 qui concerne un dispositif de démodulation cohérente muni d'un circuit de récupération de porteuse. Pour obtenir une acquisition rapide de la fréquence et de la phase de la porteuse d'émission, ce dispositif met en oeuvre une boucle de récupération qui ajuste la fréquence et la phase de l'oscillateur local sur la porteuse de l'émission. Dans un premier temps, au cours du mode dit d'accrochage, un détecteur de fréquence intervient pour accrocher l'oscillateur local, puis, dans un second temps, au cours du mode dit accroché, un détecteur de phase effectue une synchronisation de phase plus fine.

Lors de leur exploitation, les systèmes de transmission numérique, utilisant notamment des modulations codées par sauts d'amplitude et par sauts de phase, reçoivent des signaux d'entrée sur une grande dynamique superposés à du bruit. Un bruit important, même bref, peut provoquer une perte de synchronisation et entraîner le décrochage du système et le faire passer intempestivement du mode accroché vers le mode d'accrochage. Dans ce dernier mode, le système peut mettre en oeuvre différentes actions, notamment agir sur des commandes automatiques de gain afin de maintenir un contrôle de gain optimal. Il peut ainsi en découler une durée assez longue avant que le système ne repasse en mode accroché.

Le but de l'invention est donc de rendre le dispositif plus robuste aux bruits superposés et d'éviter au système de passer en mode d'accrochage Si les caractéristiques du bruit superposé ne le justifient pas.

Ce but est atteint avec un système et un récepteur comportant des moyens de contrôle d'états pour définir des états de fonctionnement du système, les moyens de contrôle d'états imposant au moins une condition de décision fondée sur les requêtes.

Plus particulièrement, les moyens de contrôle d'états décident du passage du mode accroché au mode d'accrochage à condition que la requête demandant le passage à l'état d'accrochage soit confirmée au moins une fois.

Ainsi, le passage au mode d'accrochage ne se fait plus systématiquement dès que le passage est réclamé par la requête. Au moins une confirmation est nécessaire, ce qui permet de ne pas prendre en compte des bruits brefs qui ne sont pas réellement représentatifs d'une dégradation de la communication. Le système est ainsi maintenu plus longtemps dans le mode accroché.

Le système dispose de moyens pour sauvegarder régulièrement, en mode accroché, des réglages du système et pour restituer sélectivement lesdits réglages d'après des niveaux de priorité attribués aux requêtes. Ainsi, lorsqu'une requête se présente, le système a déjà sauvegardé par exemple des réglages de contrôle automatique de gain, des réglages de fréquence de la porteuse locale, des réglages de fréquence de rythme, des valeurs de coefficients d'égalisation ou d'autres réglages. Lors de passages au mode accroché faisant suite à une requête, les moyens de contrôle d'états restituent les réglages de contrôle automatique de gain sauvegardés ou les réglages de fréquence de la porteuse locale sauvegardés. De sorte que si la requête n'est pas confirmée au cycle suivant, c'est-à-dire que le bruit était de durée brève, les réglages de gain, par exemple, sont immédiatement corrects pour décoder le signal reçu dès que le mode accroché est confirmé. Il n'est donc plus nécessaire d'attendre que les réglages de gain reviennent à des valeurs correctes pour que les performances antérieures soient rétablies. Ceci s'applique également aux réglages des signaux de correction de fréquence et/ou de phase, que l'on laisse ensuite évoluer comme prévu dès qu'ils ont été restitués.

L'apparition d'une requête constitue une alarme qui peut être utilisée pour indiquer le fonctionnement du système. Il est possible de prévoir plusieurs niveaux d'alarme en cascade, chaque niveau d'alarme pouvant conduire à des actions différentes.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent :

Figure 1 : un schéma d'un exemple de récepteur selon l'invention, muni de deux boucles de correction.

Figure 2 : trois graphes A, B, C montrant les passages entre le mode d'accrochage et le mode accroché avec respectivement zéro niveau, un niveau et deux niveaux d'alarme.

Figure 3 : un schéma des moyens de commande décidant des changements de modes.

Figure 4 : un schéma des moyens de contrôle d'états.

Figure 5 : un schéma général d'un système de transmission numérique.

Figure 6 : un schéma semblable à celui de la figure 1, avec un récepteur comprenant une seule boucle.

Figure 7 : un diagramme temporel concernant la sauvegarde et la restitution des réglages.

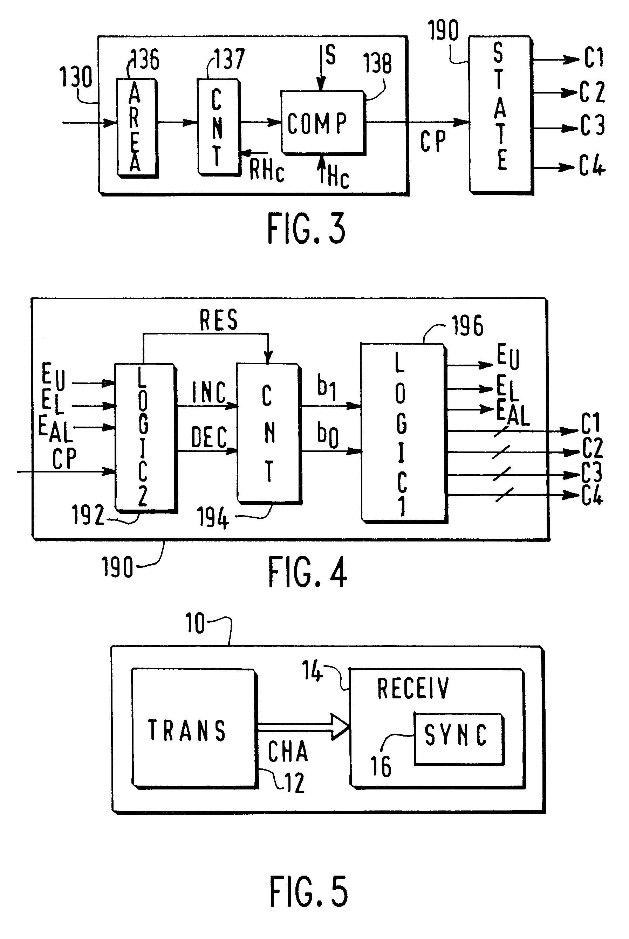

La figure 5 représente un schéma général d'un système 10 de transmission numérique de signaux qui comprend un émetteur TRANS 12 qui émet des données codées par modulation numérique vers un récepteur RECEIV 14. La transmission est effectuée à travers un canal CHA. Le récepteur comprend des moyens 16 de synchronisation SYNC pour synchroniser une porteuse locale sur la porteuse de l'émetteur.

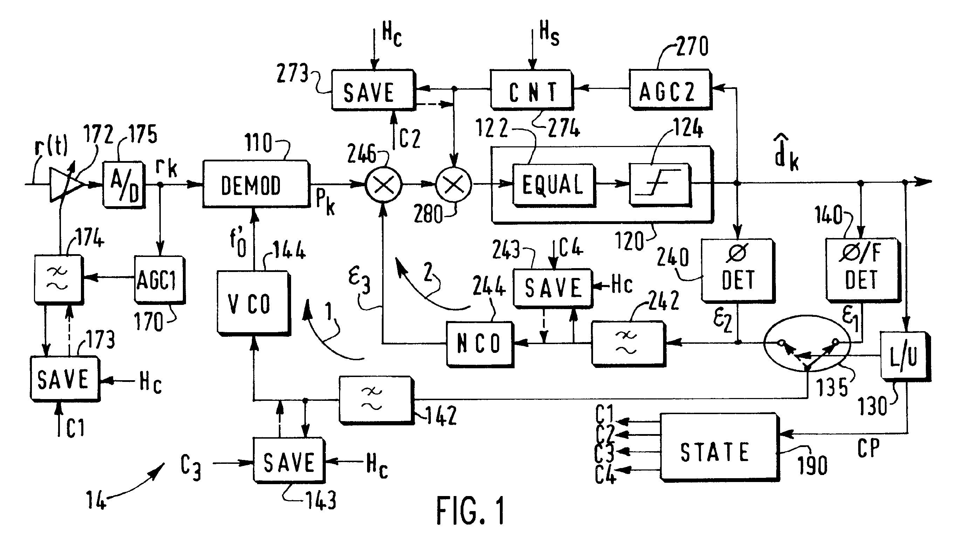

La figure 1 représente un schéma du récepteur 14 selon un mode préférentiel de réalisation de l'invention. Le signal r(t), reçu en fréquence intermédiaire FI, entre dans un amplificateur 172 dont le gain est contrôlé par un dispositif 170 de commande automatique de gain AGC1 à travers un filtre intégrateur 174. A la sortie de l'amplificateur, le signal est échantillonné par un convertisseur analogique/numérique 175 à la fréquence rythme des symboles émis (échantillons $r_k$), puis il est démodulé dans un démodulateur 110 pour fournir un signal $p_k$ formé d'une composante I en phase et d'une composante Q en quadrature avec la porteuse. L'indice k est le numéro d'échantillon. Des moyens de traitement 120 effectuent un traitement du signal $p_k$ pour fournir des symboles $\hat{a}_k$ estimant les symboles $d_k$ de la modulation codée utilisée à l'émission. Les moyens de traitement 120 comprennent des moyens 124 de décision précédés, si cela est nécessaire, de moyens 122 d'égalisation EQUAL.

Les moyens de récupération de porteuse sont utilisés pour établir une synchronisation en fréquence et en phase d'un oscillateur local avec la porteuse à fréquence intermédiaire. Dans le cas où des écarts de fréquence apparaissent entre les fréquences des deux porteuses, et dans la mesure où cet écart de fréquence est compatible avec le domaine de capture des moyens de récupération de porteuse, ceux-ci imposent à la fréquence de l'oscillateur local de devenir identique à la fréquence de la porteuse FI, ce qui fait passer les moyens de récupération de porteuse d'un mode d'accrochage (U) à un mode accroché (L). Lorsque la fréquence de l'oscillateur local est accrochée, les moyens de récupération de porteuse opèrent ensuite une synchronisation de phase entre les deux porteuses.

Pour mettre en jeu ces deux modes de fonctionnement dans l'exemple préférentiel de réalisation de l'invention, les moyens de récupération de porteuse comportent une première boucle 1 qui intervient au cours du mode d'accrochage pour l'accrochage en fréquence, et une seconde boucle 2 qui intervient ensuite, au cours du mode accroché, pour la synchronisation de phase pour compléter les corrections de défauts de synchronisation non corrigés par la première boucle. Le signal d'erreur d'un détecteur de phase sert alors aux deux boucles.

Au cours du mode d'accrochage, la première boucle comporte un détecteur 140 phase/fréquence qui délivre le premier signal d'erreur $\varepsilon 1$ qui est filtré par un premier filtre 142 passe-bas de boucle, le premier signal d'erreur ainsi filtré commandant un oscillateur 144 VCO commandé en tension. L'oscillateur 144 délivre une porteuse locale $f_o'$ qu'il maintient synchronisée avec la porteuse du signal à fréquence intermédiaire.

Lorsque l'oscillateur local a ainsi été accroché en fréquence et éventuellement imparfaitement en phase, il est généralement nécessaire de parfaire la synchronisation de phase car la gigue de phase peut être importante. Ceci est effectué, dans cet exemple préférentiel, à l'aide de la seconde boucle 2 qui comprend un détecteur 240 de phase qui délivre un second signal d'erreur $\varepsilon 2$ qui est filtré par un second filtre 242 passe-bas de boucle. Le second signal d'erreur $\varepsilon 2$, après filtrage, constitue une commande pour un oscillateur numérique NCO 244 qui fournit un signal $\varepsilon 3$ de correction de phase. Un mélangeur 246, placé entre le démodulateur 110 et les moyens 120 de traitement, mélange le signal échantillonné $p_k$ avec le signal $\varepsilon 3$ de correction de phase pour corriger la phase du signal $p_k$. Le signal $p_k$ étant formé d'une composante en phase et d'une composante en quadrature, il s'ensuit que le signal $\varepsilon 3$ de correction de phase est lui aussi formé de deux composantes en quadrature l'une par rapport à l'autre.

La seconde boucle est également contrôlée par des moyens de commande automatique de gain. Pour cela, la sortie des moyens de traitement 120 est connectée à un second dispositif de contrôle automatique de gain AGC2 270. Ce dernier est suivi d'un filtre passe-bas réalisé, par exemple, sous forme d'un compteur CNT 274 qui intègre des valeurs de correction délivrées par le dispositif AGC2. La sortie du compteur 274 entre sur une entrée d'un multiplieur 280 qui est disposé entre la sortie du mélangeur 246 et l'entrée des moyens de traitement 120. Le contrôle automatique de gain du signal $p_k$ peut être réalisé de manière différente sans s'écarter pour cela du but de l'invention.

Le détecteur phase/fréquence 140 et le détecteur de phase 240 sont connectés à une sortie des moyens de traitement 120. Ils peuvent être connectés soit en sortie des moyens 124 de décision, soit en sortie des moyens 122 d'égalisation. Les détecteurs 140, 240 opèrent numériquement.

Le démodulateur 110, le mélangeur 246 et les moyens de traitement 120 réalisent préférentiellement un traitement numérique. Néanmoins, il est possible que tous ou certains de ces éléments réalisent un traitement analogique, auquel cas les moyens d'échantillonnage 175 peuvent alors être disposés soit en sortie respectivement du démodulateur 110, du mélangeur 246 ou des moyens de traitement 120 pour obtenir un fonctionnement mixte analogique-numérique.

La première boucle 1 doit avoir une fréquence naturelle assez basse pour tolérer les délais de traitement dus au traitement effectué, mais néanmoins être suffisamment élevée pour assurer la récupération du décalage maximal de fréquence que l'on désire couvrir.

La fréquence naturelle d'une boucle est déterminée par les constantes de temps du filtre de boucle, le gain du VCO, le gain statique du détecteur de phase. De cette fréquence naturelle découle la bande de bruit de la boucle.

La seconde boucle 2 doit avoir une fréquence naturelle plus élevée que celle de la première boucle 1 de manière à permettre à la seconde boucle de compléter les corrections imposées par la première boucle.

Lorsque l'oscillateur 144 est accroché (mode L), un détecteur de mode L/U 130 active des moyens de commutation 135 qui connectent le premier filtre 142 sur la sortie du détecteur de phase 240 pour faire fonctionner alors la première boucle 1 avec le signal d'erreur de phase $\varepsilon 2$ délivré par le détecteur de phase 240. Ainsi en utilisant le même détecteur de phase dans les deux boucles, on évite des conflits d'accrochages, les corrections imposées par les boucles 1 et 2 étant toujours en phase.

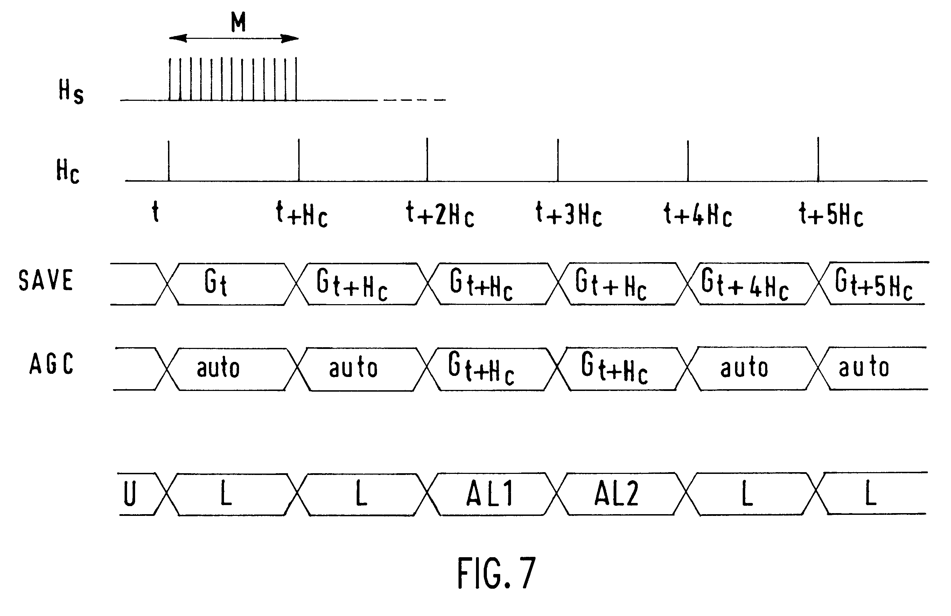

Au cours du fonctionnement du système, il est prévu de sauvegarder régulièrement des réglages dans des dispositifs de sauvegarde. Ainsi, les valeurs de corrections accumulées par le compteur 274 sont sauvegardées dans des moyens de sauvegarde SAVE, par exemple un registre 273. Le compteur 274 opère, par exemple, à la cadence $H_s$ des symboles transmis par l'émetteur. Le registre 273 effectue alors la sauvegarde après plusieurs durées-symbole, par exemple à une cadence définie par une horloge $H_c$ qui est M fois moins rapide que la cadence $H_s$. La figure 7 montre un diagramme temporel des deux horloges $H_s$ et $H_c$.

D'une manière semblable, les réglages du contrôle automatique de gain AGC1 sont sauvegardés dans des moyens de sauvegarde 173. Les réglages de l'oscillateur VCO et ceux de l'oscillateur numérique NCO sont respectivement sauvegardés dans les moyens de sauvegarde 143 et 243. Tous ces moyens sauvegardent les réglages et restituent les réglages sauvegardés (connexions en pointillé) sous le contrôle, par exemple, de l'horloge $H_c$ et de leurs commandes respectives C1, C2, C3, C4.

Ces différentes commandes appliquent différents niveaux d'alarme. Le contrôleur d'états STATE 190, relié à la sortie du détecteur de mode 130, délivre les commandes C1, C2, C3, C4 en fonction de l'état du système et des décisions prévues. Ces commandes interviennent sur le fonctionnement des dispositifs AGC1 170, AGC2 270 et sur les oscillateurs VCO 144 et NCO 244 à travers leurs dispositifs de sauvegarde respectifs pour appliquer les réglages correspondant au mode dans lequel se trouve le système, par exemple restituer les réglages antérieurs à une requête de passage au mode d'accrochage. Elles peuvent également intervenir pour sauvegarder puis restituer d'autres réglages du système, par exemple la cadence d'échantillonnage du convertisseur A/D asservi au rythme des symboles émis, les valeurs des coefficients d'égalisation des moyens d'égalisation 122 ou d'autres réglages.

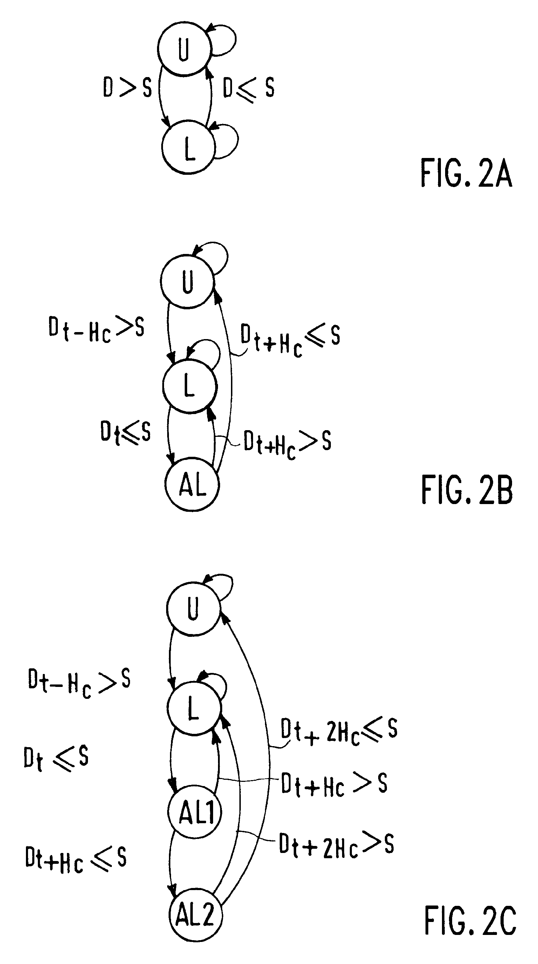

La figure 2 est un graphe représentant la génération de ces commandes. La figure 2A concerne le cas classique pour lequel aucun niveau d'alarme est généré. Pour déterminer si le dispositif doit être placé en mode accroché L ou en mode d'accrochage U, classiquement, on détermine le nombre de fois D où le signal estimé se trouve, pendant une durée déterminée $H_c$, dans une zone prédéterminée entourant l'état de la constellation (figure 3). Cette durée déterminée est par exemple la durée d'une période de l'horloge $H_c$. Lorsque ce nombre est supérieur à un seuil prédéterminé S, on estime que le système est apte à être mis en mode accroché L. Lorsque ce nombre est inférieur ou égal au seuil prédéterminé S, on estime que le système doit être mis en mode d'accrochage U. Le graphe de la figure 2A indique les conditions de passage d'un mode à l'autre. Ce graphe correspond au cas décrit par l'art antérieur. Bien évidemment, un état accroché L (respectivement un état d'accrochage U) peut être immédiatement suivi par un autre état accroché L (respectivement par un autre état d'accrochage U).

La figure 3 montre que le détecteur de mode 130 comprend un détecteur de zones AREA 136 qui reçoit le symbole estimé $\hat{a}_k$ et détermine si ce symbole est à l'intérieur de zones délimitées autour de chaque état de la constellation. Un compteur CNT 137 détermine le nombre de fois D où le symbole estimé est dans lesdites zones. Le compteur peut être remis à zéro à l'aide d'une commande $RH_c$ opérant à la cadence de l'horloge $H_c$. Un comparateur COMP 138 compare la valeur D déterminée avec un seuil S prédéterminé. Une requête CP est alors émise pour faire passer le système du mode d'accrochage vers le mode accroché ou inversement d'après le résultat de cette comparaison ou pour le laisser dans le mode courant.

Selon l'invention, la requête est introduite dans le contrôleur d'états 190 pour gérer les décisions et émettre des alarmes. La figure 2B représente le cas avec un seul niveau d'alarme AL. Considérons le système dans le mode accroché L. On observe que lorsqu'à un instant t on détecte une situation pour laquelle on a: $D_t \leq S$, le système passe alors dans un état d'alarme AL et ne passe pas immédiatement au mode d'accrochage U. Si au temps suivant t+Hc, on observe une situation telle que: $D_{t+Hc}>S$, le système revient alors au mode accroché L. Par contre, si au temps t+Hc, on observe une situation telle que: $D_{t+Hc}\leqq S$, le système revient alors au mode d'accrochage U. Ainsi, on accepte que le passage au mode d'accrochage U soit retardé si au cycle suivant (cadence $H_c$) le dépassement du seuil S apparaît à nouveau permettant de revenir de suite au mode accroché L.

D'une manière analogue, il est possible de prévoir plusieurs niveaux d'alarme AL1, AL2 comme cela est indiqué sur la figure 2C. Dans ce cas, lorsqu'au temps t+Hc, le système étant dans l'état d'alarme AL1, on observe une situation telle que: $D_{t+Hc}>S$, le système revient au mode accroché L. Par contre, si au temps t+Hc, on observe une situation telle que: $D_{t+Hc}<S$, le système ne revient pas au mode d'accrochage U, mais passe à un second niveau d'alarme AL2. Ce n'est que si au temps t+2Hc on observe une situation telle que: $D_{t+2Hc}>S$ que le système revient au mode accroché L. Dans le cas inverse, soit $D_{t+2Hc}\leqq S$, le système revient au mode d'accrochage U. Ainsi on accepte un premier niveau d'alarme AL1 pour sauvegarder, par exemple, les réglages du dispositif AGC1 et un second niveau d'alarme AL2 pour sauvegarder, par exemple, les réglages du dispositif AGC2 et des oscillateurs VCO et/ou NCO. D'autres combinaisons sont possibles.

A partir de ce qui vient d'être expliqué, l'homme du métier peut sans difficulté construire de la même manière une cascade de niveaux d'alarme pour opérer sélectivement des interventions sur le système.

Au cours de ces états d'alarme, certaines actions vont être menées pour éviter au système de perdre les réglages corrects du mode accroché dans lequel il se trouvait avant l'apparition de la requête. En particulier, la requête peut être la conséquence d'un bruit de courte durée. Dans ce cas il n'est pas favorable de perdre les réglages, car leur récupération pourrait prendre un temps trop long diminuant les performances du système. Pour gérer ces décisions et éviter par exemple aux dispositifs de contrôle automatique de gain de suivre des variations intempestives du signal, le contrôleur d'états 190 délivre les commandes C1, C2, C3, C4 destinées à intervenir comme cela a été décrit auparavant.

Le contrôleur d'états 190 sert à générer les différentes commandes en tenant compte des requêtes et de l'état dans lequel se trouve le système au moment de l'apparition de la requête. Un schéma du contrôleur d'états 190 est représenté sur la figure 4. Il comprend un compteur CNT 194, par exemple un compteur à deux bits b0, b1, pour gérer le fonctionnement d'un système ayant un seul niveau d'alarme. D'après l'état des bits b0, b1, un premier bloc logique 196 LOGIC1 génère des commandes d'états $E_U$, $E_L$, $E_{AL}$ concernant respectivement les états d'accrochage U, accroché L et d'alarme AL. Le premier bloc logique 196 délivre également les commandes C1, C2, C3, C4. Les commandes d'états $E_U$, $E_L$, $E_{AL}$ opèrent en boucle sur des entrées reliées à un second bloc logique 192 LOGIC2 du contrôleur d'états 190. Le second bloc logique reçoit également les requêtes CP issues du détecteur de mode L/U 130. Le second bloc logique 192 délivre des commandes d'incrémentation INC, de décrémentation DEC et de remise à zéro RES pour le compteur 194.

Un exemple de fonctionnement du contrôleur d'états est décrit par les tableaux I, II, III et IV représentant des tables de vérité concernant le compteur, le premier et le second bloc logique.

A chaque état $E_U$, $E_L$, $E_{AL}$ est affecté un mot binaire b0, b1, d'après le tableau I suivant.

TABLEAU I

| b1 | b0 | $E_U$ | $E_L$ | $E_{AL}$ |
|----|----|----|----|----|
| 0 | 0 | 1 | 0 | 0 |
| 0 | 1 | 0 | 1 | 0 |
| 1 | 0 | 0 | 0 | 1 |
| 1 | 1 | 0 | 0 | 0 |

D'autre part, le second bloc logique 192 délivre au compteur les commandes INC, DEC et RES d'après le tableau II suivant.

TABLEAU II

| CP | $E_U$ | $E_L$ | $E_{AL}$ | INC | DEC | RES |
|----|----|----|----|----|----|----|
| 0 | 1 | 0 | 0 | 0 | 0 | 0 |
| 0 | 0 | 1 | 0 | 1 | 0 | 0 |
| 0 | 0 | 0 | 1 | 0 | 0 | 1 |
| 1 | 1 | 0 | 0 | 1 | 0 | 0 |
| 1 | 0 | 1 | 0 | 0 | 0 | 0 |
| 1 | 0 | 0 | 1 | 0 | 1 | 0 |

Une requête CP=0 correspond à un passage du mode d'accrochage vers le mode accroché. Une requête inverse CP=1 correspond au passage inverse. Les commandes INC, DEC et RES sont dépendantes de l'état $E_U$, $E_L$, $E_{AL}$ dans lequel se trouve le système au moment de la requête.

D'après l'état des commandes INC, DEC et RES, l'état du compteur peut être modifié tel que représenté sur le tableau III suivant.

TABLEAU III

| INC | DEC | RES | CNT |
|-----|-----|-----|-----|
| 0 | 0 | 0 | $CNT_{k-1}$ |
| 1 | 0 | 0 | $CNT_{k-1}+1$ |
| 0 | 1 | 0 | $CNT_{k-1}-1$ |
| 1 | 1 | 0 | NA |
| x | x | 1 | 0 |

Deux commandes simultanées INC=1 et DEC=1 ne sont pas autorisées (NA) par le contrôleur. Lorsque RES=1, il y a remise à zéro du compteur quel que soient les valeurs de INC et de DEC (repères x).

Les commandes C1 à C4 appliquées aux organes déjà décrits, sous validation de l'horloge Hc, sont générées par le premier bloc logique 196 en distinguant la commande de sauvegarde C2(S) et la commande de restauration C2(R). Ces commandes sont bien évidemment dépendantes de l'état du système $E_U$, $E_L$, $E_{AL}$. Le tableau IV indique ces possibilités.

TABLEAU IV

| b1 | b0 | C2(S) | C2(R) |
|----|----|-------|-------|
| 0 | 0 | x | x |
| 0 | 1 | 1 | 0 |
| 1 | 0 | 0 | 1 |
| 1 | 1 | x | x |

Le repère 1 indique que la commande C2(S) ou C2(R) est active, le repère 0 indique qu'elles sont inactives. Le repère X indique qu'elles peuvent être soit à l'état i soit à l'état 0.

La figure 7 représente un diagramme montrant comment est effectuée la sauvegarde des réglages puis leur restauration d'après l'état du système. Les sauvegardes sont réalisée à la cadence de l'horloge Hc donc à des instants t. t+Hc, t+2Hc, t+3Hc... Supposons qu'à l'instant t le système passe à l'état accroché L. A cet instant le dispositif de sauvegarde SAVE sauvegarde la valeur du gain $G_t$ à l'instant t. Entre les instants t et t+Hc la valeur du gain évolue de manière automatique jusqu'à une autre valeur $G_{t+Hc}$. Cette valeur est donc sauvegardée à l'instant t+Hc. Supposons qu'à l'instant t+2Hc le système passe au niveau d'alarme AL1. Dans ce cas, selon l'invention, au cours de la période suivante c'est le gain $G_{t+Hc}$ qui sera restitué et sera appliqué entre les instants t+2Hc et t+3Hc. Il restera donc stable au cours de cette période et ne pourra pas évoluer librement. Cette situation se prolongera Si un second niveau d'alarme AL2 succède au niveau AL1. Si à l'instant t+4Hc le système repasse en mode accroché L, le gain recommencera à varier librement.

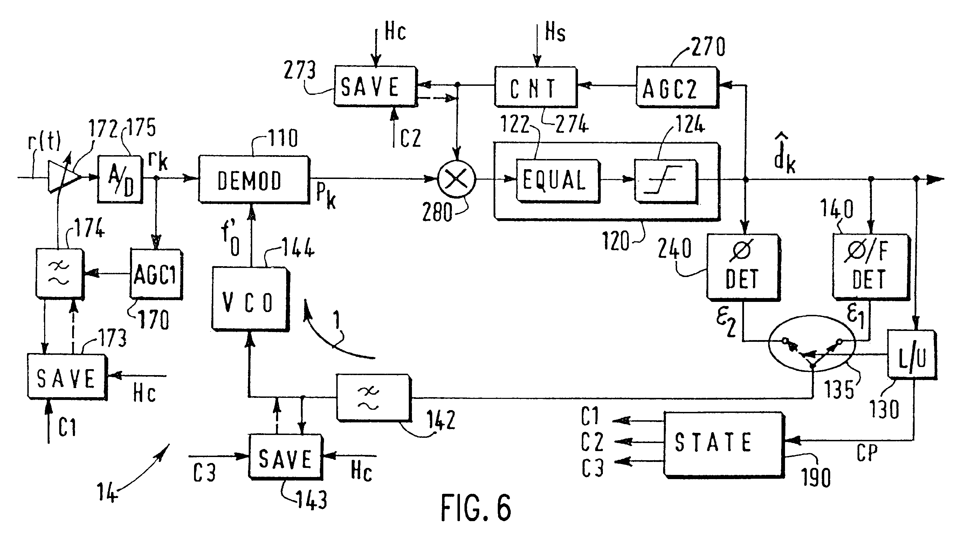

L'invention vient d'être décrite dans le cas d'un exemple préférentiel se rapportant à un système de transmission numérique mettant en oeuvre deux boucles de synchronisation. D'autres configurations des moyens de synchronisation sont également possibles. Notamment, le système de transmission peut ne renfermer qu'une seule boucle comme cela est représenté sur la figure 6. Ce schéma est semblable à celui de la figure 1 duquel ont été éliminés le filtre passe-bas 242, l'oscillateur numérique 244, le mélangeur 246 et le dispositif de sauvegarde 243. Les explications déjà fournies restent applicables pour les autres moyens.

**Revendications**

1. Système de transmission numérique muni d'un émetteur et d'un récepteur qui comprend des moyens de synchronisation pour estimer et compenser des défauts de synchronisation entre une porteuse locale et un signal d'entrée, les moyens de synchronisation comprenant:

   - des moyens de génération de la porteuse locale,
   - des moyens de détection phase/fréquence délivrant un premier signal d'erreur lequel corrige les défauts de synchronisation en mode d'accrochage,
   - des moyens de détection de phase délivrant un second signal d'erreur lequel corrige les défauts de synchronisation en mode accroché,
   - des moyens de commande déterminant des requêtes demandant de placer les moyens de synchronisation soit en mode d'accrochage, soit en mode accroché, caractérisé en ce que le système comporte des moyens de contrôle d'états pour définir des états de fonctionnement du système, les moyens de contrôle d'états imposant au moins une condition de décision fondée sur les requêtes.

2. Système selon la revendication 1 caractérisé en ce que les moyens de contrôle d'états décident du passage du mode accroché au mode d'accrochage à condition que la requête demandant le passage à l'état d'accrochage soit confirmée au moins une fois.

3. Système selon la revendication 1 ou 2 caractérisé en ce qu'il comprend des moyens pour sauvegarder des réglages du système en mode accroché, les moyens de contrôle d'états restituant sélectivement lesdits réglages d'après des niveaux de priorité attribués aux requêtes.

4. Système selon la revendication 3 caractérisé en ce que les réglages sauvegardés sont des réglages de contrôle automatique de gain, des réglages de fréquence de la porteuse locale, des réglages de fréquence de rythme, des valeurs de coefficients d'égalisation.

5. Système selon la revendication 4 caractérisé en ce que, lors d'un passage au mode accroché faisant suite à une requête, les moyens de contrôle d'états restituent les réglages de contrôle automatique de gain sauvegardés.

6. Système selon la revendication 4 caractérisé en ce que, lors d'un passage au mode accroché faisant suite à une requête, les moyens de contrôle d'états restituent les réglages de fréquence de la porteuse locale sauvegardés.

7. Récepteur pour un système de transmission numérique, le récepteur comprenant des moyens de synchronisation pour estimer et compenser des défauts de synchronisation entre une porteuse locale et un signal d'entrée, les moyens de synchronisation comprenant:

   - des moyens de génération de la porteuse locale,
   - des moyens de détection phase/fréquence délivrant un premier signal d'erreur lequel corrige les défauts de synchronisation en mode d'accrochage,
   - des moyens de détection de phase délivrant un second signal d'erreur lequel corrige les défauts de synchronisation en mode accroché,
   - des moyens de commande déterminant des requêtes demandant de placer les moyens de synchronisation soit en mode d'accrochage, soit en mode accroché, caractérisé en ce que le système comporte des moyens de contrôle d'états pour définir des états de fonctionnement du système, les moyens de contrôle d'états imposant au moins une condition de décision fondée sur les requêtes.

8. Récepteur selon la revendication 7 caractérisé en ce que les moyens de contrôle d'états décident du passage du mode accroché au mode d'accrochage à condition que la requête demandant le passage à l'état d'accrochage soit confirmée au moins une fois.

9. Récepteur selon la revendication 7 ou 8 caractérisé en ce qu'il comprend des moyens pour sauvegarder des réglages du système en mode accroché, les moyens de contrôle d'états restituant sélectivement lesdits réglages d'après des niveaux de priorité attribués aux requêtes.

10. Récepteur selon la revendication 9 caractérisé en ce que les réglages sauvegardés sont des réglages de contrôle automatique de gain, des réglages de fréquence de la porteuse locale, des réglages de fréquence de rythme, des valeurs de coefficients d'égalisation.

11. Récepteur selon la revendication 10 caractérisé en ce que, lors d'un passage au mode accroché faisant suite à une requête, les moyens de contrôle d'états restituent les réglages de contrôle automatique de gain sauvegardés.

12. Récepteur selon la revendication 10 caractérisé en ce que, lors d'un passage au mode accroché faisant suite à une requête, les moyens de contrôle d'états restituent les réglages de fréquence de la porteuse locale sauvegardés.

FIG. 1

EP 0 748 093 A1

FIG. 2A

$D > S$  $D \leqslant S$

FIG. 2B

$D_t - H_c > S$  $D_t + H_c \leqslant S$

$D_t \leqslant S$  $D_t + H_c > S$

FIG. 2C

$D_t - H_c > S$

$D_t \leqslant S$  $D_t + 2H_c \leqslant S$

$D_t + H_c > S$

$D_t + H_c \leqslant S$  $D_t + 2H_c > S$

9

FIG. 3

FIG. 4

FIG. 5

FIG. 6

EP 0 748 093 A1

EP 0 748 093 A1

$H_S$

M

$H_C$

$t$       $t+H_C$       $t+2H_C$       $t+3H_C$       $t+4H_C$       $t+5H_C$

SAVE $\quad G_t \quad G_{t+H_C} \quad G_{t+H_C} \quad G_{t+H_C} \quad G_{t+4H_C} \quad G_{t+5H_C}$

AGC $\quad$ auto $\quad$ auto $\quad G_{t+H_C} \quad G_{t+H_C} \quad$ auto $\quad$ auto

U $\quad$ L $\quad$ L $\quad$ AL1 $\quad$ AL2 $\quad$ L $\quad$ L

FIG. 7

EP 0 748 093 A1

Office européen
des brevets

**RAPPORT DE RECHERCHE EUROPEENNE**

Numero de la demande
EP 96 20 1548

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y,D | EP-A-0 530 107 (FRANCE TELECOM) 3 Mars 1993<br>* colonne 16, ligne 35 - ligne 53 * | 1,2,7,8 | H04L27/38 |
| A | * colonne 20, ligne 26 - ligne 49 *<br>--- | 3-6,9-12 | |
| Y | WO-A-95 10893 (PROXIM INC) 20 Avril 1995<br>* abrégé * | 1,2,7,8 | |
| A | * page 25, ligne 21 - ligne 25 *<br>--- | 3-6,9-12 | |
| A | PATENT ABSTRACTS OF JAPAN<br>vol. 016, no. 372 (E-1246), 11 Août 1992<br>& JP-A-04 117837 (CANON INC), 17 Avril 1992,<br>* abrégé *<br>----- | 5,11 | |

DOMAINES TECHNIQUES RECHERCHES (Int.Cl.6)

H04L

Le présent rapport a été établi pour toutes les revendications

| Lieu de la recherche | Date d'achèvement de la recherche | Examinateur |
|---|---|---|
| LA HAYE | 23 Septembre 1996 | Ghigliotti, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)